# EUROPEAN PATENT SPECIFICATION

(11) **EP 0 461 273 B1**
(45) Date of publication and mention of the grant of the patent: **12.03.1997**
(21) Application number: 91901632.9
(22) Date of filing: 27.12.1990
(51) Int. Cl.: B32B 27/08, B32B 31/00

(54) **PROCESS FOR PRODUCING LAMINATE**
VERFAHREN ZUR HERSTELLUNG EINES LAMINATS
PROCEDE DE PRODUCTION DE STRATIFIES

(30) Priority: 29.12.1989 JP 340524/89
(43) Date of publication of application: 18.12.1991
(73) Proprietor: TOPPAN PRINTING CO. LTD., Tokyo 110 (JP)
(72) Inventor: KATO, Takeo, Taito-ku Tokyo 110 (JP); IMAI, Takayuki, Taito-ku Tokyo 110 (JP); TOMATSURI, Takeo, Taito-ku Tokyo 110 (JP)
(74) Representative: Bühling, Gerhard, Dipl.-Chem.
(86) International application number: JP9001721
(87) International publication number: WO9109730

(56) References cited:
- EP-A- 0 341 076
- FR-A- 2 269 411
- GB-A- 1 405 769
- JP-A- 1 139 337
- JP-A-50 126 085
- JP-A-62 115 039
- US-A- 4 477 506
- WORLD PATENTS INDEX LATEST Week 8233, 8 July 1982 Derwent Publications Ltd., London, GB; AN 82-68931E & JP-A- 57 109 649
- WORLD PATENTS INDEX LATEST Week 8511, 2 February 1985 Derwent Publications Ltd., London, GB; AN 85-065339 & JP-A-60 020 984

## Description

### Technical Field

This invention relates to a process for producing laminates, more particularly to a process for producing laminates by coextrusion that are suitable for use as constituent materials for beverage containers, etc.

### Background Art

Beverages such as sake and whiskey have a strong tendency to permeate through the constituent materials of their containers, so containers of such beverages have conventionally been formed of paper that is coated with an ionomer layer or the like which in turn is overlaid with a metal foil such as an aluminum foil in order to prevent the permeation of beverages. However, the use of metal foils presents the problem of cracking, particularly in bent portions of the container and in order to prevent it, a biaxially drawn polyester film has usually been provided on the metal foil. Further, in the case of such beverage containers, various considerations including cleanness, water resistance, moisture resistance and heat sealability have made it conventional to apply polyolefins or the like onto the biaxially drawn polyester film, namely, the portion that forms the inner surface of the container.

However, the use of the constituent materials described above has the problem associated with polyolefins, that is, polyolefins will adsorb or be permeable to the flavor ingredients of beverages and hence are unable to maintain the inherent aroma and taste of beverages. In addition, when the constituent materials described above are prepared by extrusion coating of polyolefins, oxidation is likely to occur to produce a malodor.

With a view to solving these problems, constituent materials for containers of the type described above that replace polyolefins by polyesters have come to be used recently.

In JP-A-57/109 649, the use of a coextruded laminate for the formation of packages such as beverage containers is disclosed, which consist of an outer polyolefin layer being adjacent to an inner low-density polyolefin layer.

As temperature for performing the coextrusion of the two-layered laminate 230°C is suggested.

An example of this approach is described in Japanese Patent Application Kokai Hei No. 1-139337 which reports a laminate obtained by combining a coextruded film of a polyester resin, an adhesive polyolefin resin and a polyolefin resin with a biaxially drawn polyester resin. However, strong adhesion is not attained by an assembly of resins combined with the biaxially drawn polyester resin after they are worked into a film. Further, the combining operation must be performed off-line (in a separate step), which leads to a higher production cost. Hence, it has long been desired to develop a process for producing a laminate in a way that satisfies the aforementioned requirements and that is economical.

An object, therefore, of the present invention is to provide a process for producing a laminate that has satisfactory adhesion, that is inexpensive and that has good processability experiencing smaller amounts of meandering and neck-in.

### Disclosure of the Invention

Under the circumstances described above, the present inventors conducted intensive studies and found that the above-stated object of the present invention could be attained by a process for producing a laminate comprising the steps of coextruding a polyester resin, an adhesive resin and a polyolefin under a temperature condition of 250 to 280°C, applying a corona discharge treatment to the surface of the polyolefin layer and, immediately thereafter, bonding the surface of said polyolefin layer and an adhesive-coated substrate in-line and in a continuous manner.

The present invention is described below in greater detail.

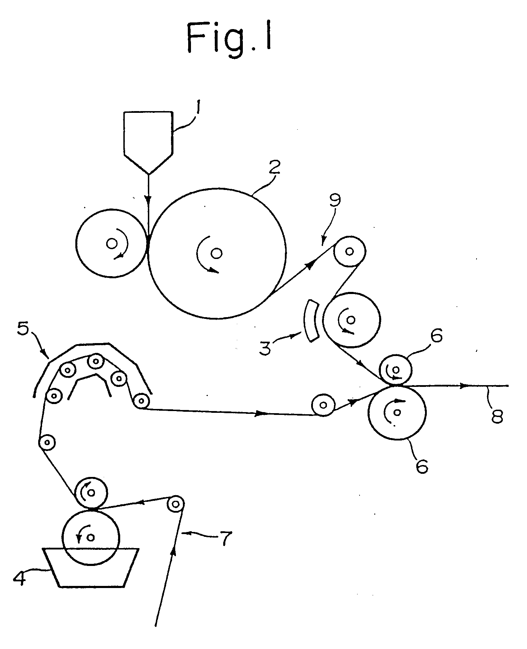

Fig. 1 is a schematic cross-sectional view showing an example of the process for producing a laminate in accordance with the present invention. Referring to Fig. 1, a polyester resin, an adhesive resin and a polyolefin are individually melted in an extruder and converge at a point either before or within or immediately after a T-die to form three molten layers which are superposed in the order written. The layers are then coextruded from the T-die 1 and cooled to solidify on chill rollers 2 to produce a three-layered film 9. It is to be noted that the coextrusion step must be performed within a temperature range of 250 - 280°C. If the coextrusion is performed at temperatures higher than 280°C, the polyethylene, etc. are oxidized to give off an "oxidation" odor, which makes them unsuitable for use as constituent materials for beverage containers. Further, in a long-run operation, the polyester will partly decompose to cause deterioration in such aspects as physical properties and heat sealability. The surface of the three-layer film on the polyolefin side is subjected to a corona discharge treatment with a corona discharge device 3 and, immediately thereafter, i.e., in-line, the corona-discharge treated surface is combined with a substrate 7 that is preliminarily coated with an adhesive 4 and dried in an oven 5 to form an adhesive layer, and the assembly is compressed with pressure rollers 6 to obtain a laminate 8. The term "in-line" as used herein means performance within a continuous single step as contrasted with "off-line" which means a separate step. Also in contrast with the coextrusion coating in which multiple molten layers are coextruded onto a substrate and combined together in a molten state, the method employed in the present invention is such that, as described above, a film that is already obtained by coextrusion is combined with a substrate and this method is called "coextrusion laminating".

In the present invention, the surface of the polyolefin layer in the film coextruded at a temperature of from 250 to 280°C has few polar groups because of its chemical structure and have no affinity for the adhesive coated on the substrate. To compensate for the resulting poor adhesion, the surface of the polyolefin layer is subjected to a preliminary surface treatment by corona discharge.

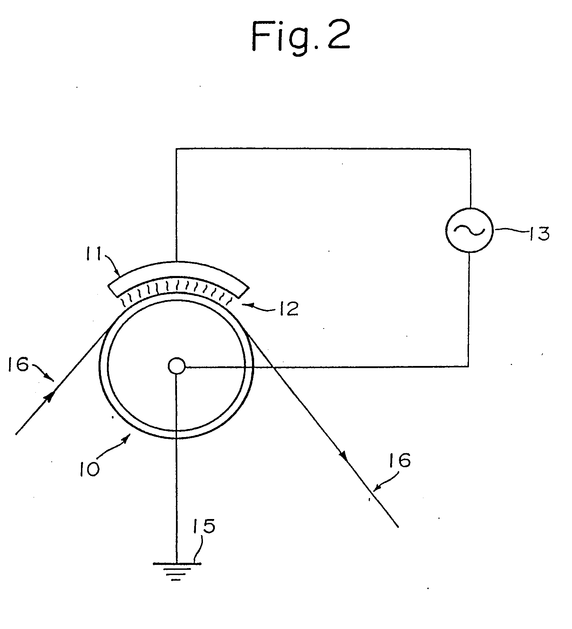

Fig. 2 is a schematic cross-sectional view showing an example of the corona discharge device to be used in the present invention. Referring to Fig. 2, a high-frequency oscillator 13 produces a high voltage of high frequency that is applied between an insulated electrode 11 and a dielectric roller 10 connected to the ground 15, whereupon the air gap is ionized by dielectric breakdown to produce a corona discharge 12 through which a three-layer film 16 is passed to undergo surface treatment. To attain satisfactory adhesion strength, the polyolefin layer of the film after the corona discharge treatment preferably has a surface tension of at least 36 dynes/cm, more preferably at least 38 dynes/cm. Depending on various factors including its efficiency, the corona discharge device preferably generates a working power of at least 4 watts/m²·min, more preferably at least 6 watts/m²·min.

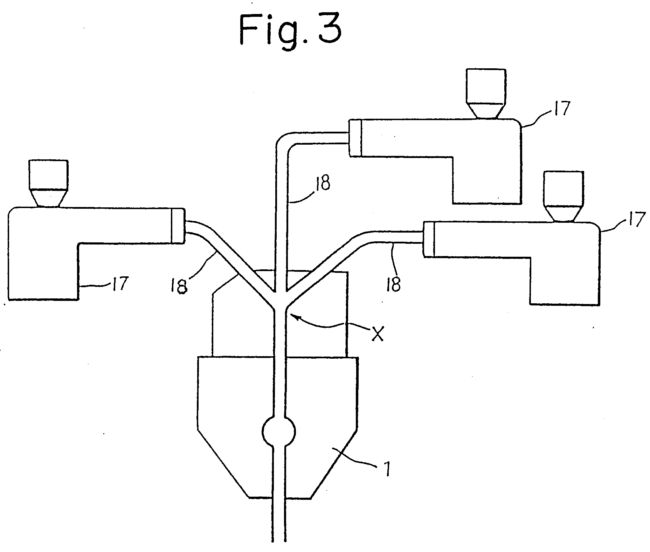

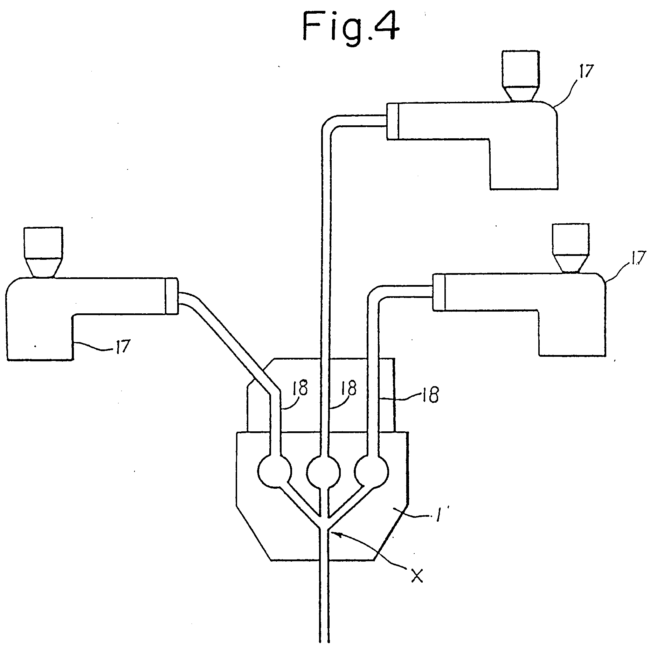

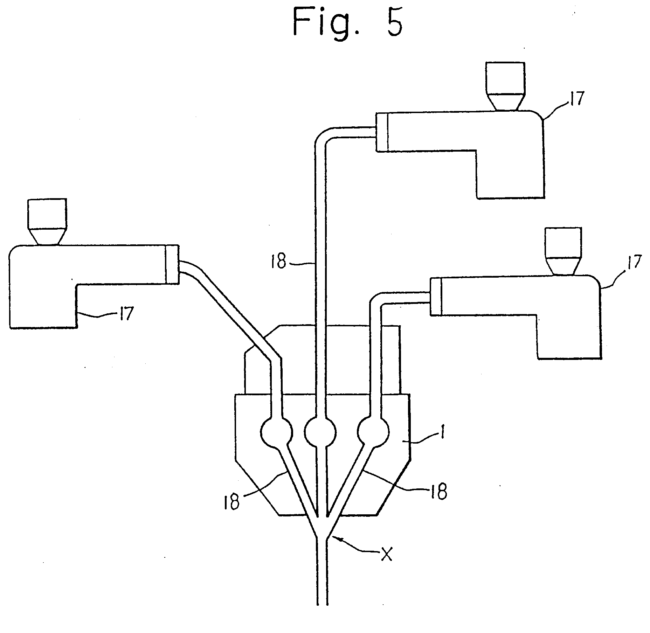

Figs. 3 - 5 are schematic diagrams showing part of the process of coextrusion in preferred embodiments. Fig. 3 depicts a feed block method in which molten resin streams converge before the die; Fig. 4 depicts a multi-manifold method in which molten resin streams converge within the die; and Fig. 5 depicts a multi-slot method in which molten resin streams converge outside the die. In each of Figs. 3 - 5, a polyolefin, an adhesive resin and a polyester resin are melted in associated extruders 17 and passed through feed blocks 18 to be extruded from the T die 1. In the case shown in Fig. 3, the three molten resins are combined at point X before the die where the feed blocks converge and are thereafter extruded from the T-die; in the case shown in Fig. 4, the three molten resins are combined at point X within the T-die and are thereafter extruded; and in the case shown in Fig. 5, the respective molten resins are combined at point X immediately after they are extruded.

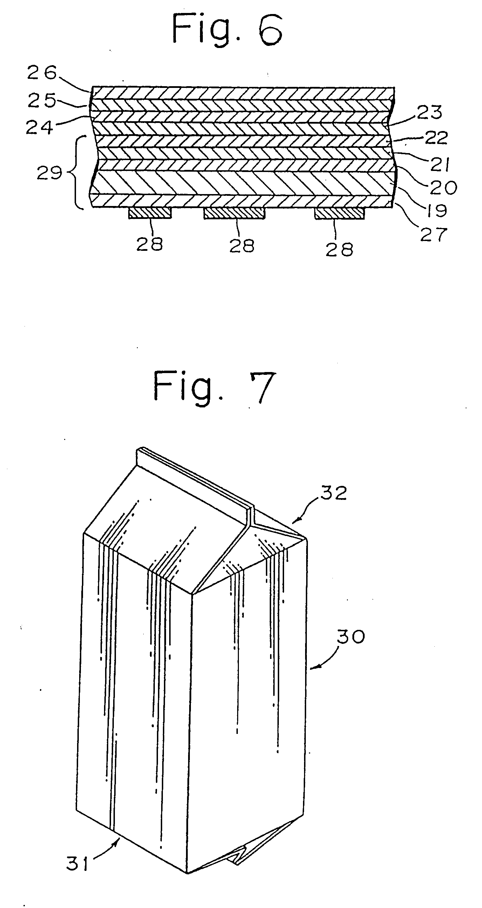

Fig. 6 is a schematic cross-sectional view showing an example of the laminate produced by the present invention. Referring to Fig. 6, the laminate of the present invention is chiefly composed of a substrate 29, as well as a polyolefin layer 24, an adhesive resin layer 25 and a polyester resin layer 26 that are provided together with an intervening adhesive or primer coating layer 23 present. The substrate 29 is chiefly composed of a paper base 19, a metal foil 21 provided together with, for example, an intervening ionomer layer 20 present, and a biaxially drawn polyester resin 22 provided on said metal foil 21. A layer such as a polyethylene layer 27 is provided, as required, on the paper base 19 which is opposite to the side where the biaxially drawn polyester resin 22 is formed, and a predetermined printed pattern 28 may be applied onto the polyethylene layer 27. The ionomer layer 20 is provided for bonding the paper to the metal foil and in place of an ionomer, polyethylene, ethylene-methacrylic acid copolymer, etc. may be used.

The polyester resin layer 26 is provided in order to suppress the permeation of beverages, etc. and to insure cleanness without causing any adverse effects such as adsorption or permeation of flavor ingredients. Considering its use as a constituent material for containers, the polyester resin making up the polyester resin layer is preferably a heat-sealable polyester resin having good heat sealability. Heat-sealable polyester resins may be exemplified by low-crystallinity or non-crystalline polyester resins having a solubility index of at least 9.5 and a glass transition temperature Tg of 50 - 150°C. If polyester resins having Tg less than 50°C are used, they will soften and become sticky during the processing or storage of package materials and troubles such as blocking will occur to cause operational problems. If polyester resins having Tg higher than 150°C are used, the bag- or box-making operation becomes difficult during heat sealing. Another problem with highly crystalline polyester resins is their lower heat sealability and increased brittleness.

The polyester resin described above comprises a copolymer of a polybasic acid and a polyhydric alcohol. Preferred polybasic acids are those which contain terephthalic acid as a main component and preferred polyhydric alcohols are those which contain ethylene glycol as a main component. The polybasic acid and polyhydric alcohol described above may contain other polybasic acids and polyhydric alcohols as comonomer components.

Specific examples of the heat-sealable polyester for use in the present invention include: (1) a co-condensation polymer of at least two dibasic acids containing terephthalic acid as a chief component and a diol; (2) a co-condensation polymer of terephthalic acid and at least two diols; and (3) a polymer alloy of polyethylene terephthalate or the co-condensation polymer (1) or (2) with a modified polyolefin.

Other dibasic acids that can be contained as comonomer components with terephthalic acid include: aromatic dicarboxylic acids such as isophthalic acid, naphthalenedicarboxylic acid, diphenyldicarboxylic acid, diphenoxyethanedicarboxylic acid, diphenyletherdicarboxylic acid and diphenylsulfonedicarboxylic acid; alicyclic dicarboxylic acids such as hexahydroterephthalic acid and hexahydroisophthalic acid; aliphatic dicarboxylic acids such as adipic acid, sebacic acid and azelaic acid; and oxyacids such as p-β-hydroxyethoxybenzoic acid, p-oxybenzoic acid and ε-oxycaproic acid.

Diols may be exemplified by glycoles such as ethylene glycol, propylene glycol, 1,4-butanediol, 1,4-dicyclohexanedimethanol, trimethylene glycol, tetramethylene glycol, hexamethylene glycol, decamethylene glycol, neopentylene glycol, diethylene glycol, 1,1-cyclohexanedimethylol, 1,4-cyclohexanedimethylol, 2,2-bis(4-β-hydroxyethoxyphenyl)propane, bis-(4-β-hydroxyethoxyphenyl)sulfonecyclohexanediol, 1,4-bis(β-hydroxyethoxy)benzene, and 1,3-bis(β-hydroxyethoxy)benzene.

Examples of the modified polyolefin that is preferably used in the present invention include copolymers of ethylene and unsaturated carboxylic acids or esters thereof, as well as ionomers. Exemplary unsaturated carboxylic acids or polyesters thereof include acrylic acid, methacrylic acid, methyl acrylate, methyl methacrylate, ethyl acrylate, ethyl methacrylate, etc. The copolymers of ethylene and unsaturated carboxylic acids or esters thereof preferably contain unsaturated carboxylic acids in amounts of 3 - 20 wt%. In the case of esters, the ester component is preferably contained in an amount of 1 - 20 wt%.

In the present invention, the polyester resin described above may incorporate nucleating agents or various additives such as lubricating agents, anti-blocking agents, stabilizers, anti-haze agents and colorants. The fine particles of polyolefins or inorganic materials having particle sizes of 2 - 10 µm are used as such nucleating agents. Exemplary polyolefins include low-density polyethylene, high-density polyethylene, linear low-density polyethylene, polypropylene, etc., and exemplary inorganic materials include carbon black, talc, gypsum, silica, alumina, calcium carbonate, titanium dioxide, graphite, glass powder, metal powders, etc.

The polyester resin layer may of any thickness and it may be used over the range of, for example, 3 - 100 µm.

The polyolefin layer to be used in the present invention serves to cooperate with the adhesive resin layer to support the polyester resin layer not only to suppress meandering or neck-in during coextrusion but also to improve the adhesion to the substrate. Examples of the polyolefin that forms the polyolefin layer include polyethylene, polypropylene, etc. The polyolefin layer to be used in the present invention may be of any thickness but it may be used over the range of, say, 3 - 100 µm.

The adhesive resin layer provided in order to enhance the adhesion between the polyester resin layer and the polyolefin layer may be of any thickness but it may be used over the range of, say, 3 - 50 µm. It should however be noted that in order for the adhesive resin layer to work as the support of the polyester resin layer, the total thickness of the polyolefin layer and the adhesive resin layer is preferably within the range of 10 - 150 µm.

Examples of the adhesive resin which forms the adhesive resin layer described above include ethylene-α-olefin copolymers (density≤0.910), polyolefins modified by copolymerization or graft polymerization with a carboxylic acid monomer, an anhydride or ester thereof. Exemplary polyolefins include polyethylene, polypropylene, polybutene, ethylene-vinyl acetate copolymer, ethylene-acrylic acid copolymer, ethylene-methacrylic acid copolymer, ethylene-α-olefinic acid copolymer, etc. Specific examples of a carboxylic acid monomer, an anhydride or ester thereof include methacrylic acid, maleic acid, fumaric acid, methacrylic acid anhydride, maleic anhydride, ethyl methacrylate, glycidyl acrylate, diglycidyl methacrylate.

In the present invention, the substrate must be coated with an adhesive by a suitable method such as gravure roll coating before the three-layer film described above is compressed onto the substrate.

Examples of the adhesive include one- or two-part reactive urethane based adhesives, a polyester based adhesives, acrylic-urethane based adhesives, epoxy-urethane based adhesives, etc. These adhesives are preferably coated in amounts ranging from 0.5 g/m² to 10 g/m².

The substrate may be of any type selected from among paper, nonwoven fabrics, aluminum foils, plastic films, etc. In order to prevent the permeation of the contents through cracks in the metal foil, a drawn plastic layer is preferably provided on the side contacting the polyolefin layer. Drawn plastics are preferably biaxially drawn polyester or nylon resins that are obtained by shaping polyester or nylon resins, then drawing in the machine direction by a factor of 4 - 6 and in the transverse direction by a factor of 4 - 6, and finally heat setting the biaxially drawn resin. The drawn plastic layer preferably has a thickness of 9 - 25 µm.

The polyester resin which forms the biaxially drawn polyester resin comprises a copolymer of a polybasic acid and a polyhydric alcohol. Preferred polybasic acids are those which contain terephthalic acid as a chief component and preferred polyhydric alcohols are those which contain ethylene glycol as a chief component. The polybasic acid and polyhydric alcohol described above may contain other polybasic acids and polyhydric alcohols as comonomer components.

Other polybasic acids that can be used as comonomer components include: aromatic dicarboxylic acids such as isophthalic acid, naphthalenedicaboxylic acid, diphenyldicarboxylic acid, diphenoxyethanedicarboxylic acid, diphenyletherdicarboxylic acid and diphenylsulfonedicarboxylic acid; alicyclic dicarboxylic acids such as hexahydroterephthalic acid and hexahydroisophthalic acid; aliphatic dicarboxylic acids such as adipic acid, sebacic acid and azelaic acid; oxyacids such as p-β-hydroxybenzoic acid, p-oxybenzoic acid and ε-oxycaproic acid; aromatic polybasic acids such as trimellitic acid, trimesic acid and 3,3',5,5'-tetracarboxydiphenyl; aliphatic polybasic acids such as butanetetracarboxylic acid; and oxypolycarboxylic acids such as tartaric acid and malic acid.

Other polyhydric alcohols that can be used as comonomer components include: glycols such as trimethylene glycol, tetramethylene glycol, hexamethylene glycol, decamethylene glycol, neopentylene glycol, diethylene glycol, 1,1-cyclohexanedimethylol, 1,4-cyclohexanedimethylol, 2,2-bis(4-β-hydroxyethoxyphenyl)propane, bis-(4-β-hydroxyethoxyphenyl)sulfonecyclohexane, 1,4-bis(β-hydroxyethoxy)benzene, and 1,3-bis(β-hydroxyethoxy)benzene; and polyhydric alcohols such as fluoroglycine, 1,2,4,5-tetrahydroxybenzene, glycerin, trimethylolethane, trimethylolpropane and pentaerythritol.

In the present invention, the polyester resin may incorporate nucleating agents or various additives such as lubricants, anti-blocking agents, stabilizers, anti-haze agents and colorants of the same types as used in the polyester resin layer already described above.

The substrate of the laminate according to the present invention is not limited to any particular type as long as it can be used as a structural support for containers but those substrates which contain paper in the layer arrangement are preferred. Preferred examples of the paper that forms the substrate include white board paper, raw paper for milk carton, acid-proof paper, etc. that have basis weights of 100 - 400 g/m².

The paper described above is usually provided with a metal foil for such purposes as protection against the permeation of beverages, and a preferred metal foil is an aluminum foil having a thickness of 6 - 20 µm. Metal foils may be provided on the paper with the aid of polyethylene, an ethylene-methacrylic acid copolymer, an ionomer resin, etc. If desired, a layer composed of polyethylene, etc. may be provided on the paper opposite the metal foil.

The laminated material of the present invention may adopt various layer arrangements within the scope of the present invention and an example is the combination of printing ink/polyethylene/paper/ionomer/aluminum foil/biaxially drawn polyester resin/adhesive/polyolefin/adhesive resin/polyester resin.

The laminate of the present invention may be produced by the following method: (1) extrusion-coating polyethylene onto paper and applying printing onto said polyethylene; in a separate step, (2) dry-laminating a biaxially drawn polyester resin onto an aluminum foil; (3) bonding the surface of paper in (1) to the surface of aluminum foil in (2) together with an intervening polyethylene, ionomer resin, ethylene-methacrylic acid copolymer present, whereby a substrate is prepared; (4) applying an adhesive onto the surface of the biaxially drawn polyester resin in (2) by gravure roll coating and drying the applied coat in an oven to provide an adhesive layer on the substrate; and (5) preparing a three-layer film by the coextrusion method described hereinabove, performing a corona discharge treatment on the surface of the polyolefin layer in the film and, immediately thereafter, compressing the adhesive layer of (4) onto the film in-line, thereby forming a laminate.

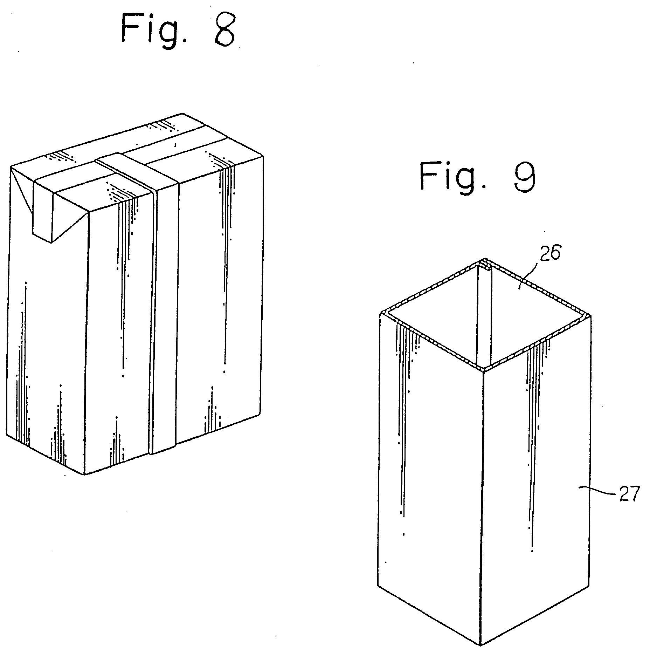

Containers to which the laminate of the present invention can advantageously be applied are those in various forms which are intended to contain highly permeable liquid beverages including sake, whiskeys, juice, coffee, ptisan, oolong, mineral water, soup, etc. and which are exemplified by such containers as Tetrapacks, blocks, etc. that are shown generally in Figs. 7 and 8. In order to fabricate a container of the type shown in Fig. 7 using the laminate of the present invention, the first step comprises forming a sleeve 30 as shown in Fig. 9. In this step, the sleeve must be formed in such a way that the end faces of constituent materials of the container will not be exposed on its inner surface to contact the beverage in it. To meet this need, two side edge portions of the polyester forming the inner layer, or the surfaces one side edge portion of which is folded back to be superposed on the other portion for subsequent sealing, are subjected to a flame treatment to be sealed. In the ensuing second step, a bottom portion 31 is formed and, in the third step, the container fabricated in the first and the second steps is filled with the contents. Finally, in the fourth step, a top portion 32 is formed to fabricate a completed container.

In an alternative method, a roll of the laminate of the present invention may be filled with the contents, with a container being formed by heat sealing two polyester layers facing each other.

As a further advantage, the laminate of the present invention is characterized by its nature of less adsorbing pharmaceutically active ingredients such as menthol and camphor, so it is capable of retaining such pharmaceutically active ingredients in an effective way and hence can be used as a cataplasm packaging material. Further, the laminate is also usable in other applications such as an aroma packaging material, a bath preparation packaging material and a packaging material for preventing the permeation and evaporation of flavors.

### Brief Description of Drawings

Fig. 1 is a schematic cross-sectional view showing an example of the process for producing a laminate in accordance with the present invention; Fig. 2 is a schematic partial cross-sectional view showing an example of the corona discharge device to be used in the present invention; Figs. 3 - 5 are schematic diagrams showing part of the process of coextrusion in different embodiments of the present invention; Fig. 6 is a schematic cross-sectional view showing an example of the laminate produced by the present invention; Figs. 7 and 8 are perspective views showing examples of the container that is fabricated using the laminate of the present invention; and Fig. 9 is a perspective view showing the step of preparing a sleeve in the fabrication of the containers shown in Figs. 7 and 8.

### Best Mode for Carrying Out the Invention

The following examples are provided for the purpose of further illustrating the present invention.

### Example 1

A polybasic acid consisting of 60 mol% terephthalic acid and 40 mol% isophthalic acid was copolycondensed with an equimolar amount of ethylene glycol to obtain a copolycondensed polyester resin (glass transition temperature Tg = 58°C; solubility index 10.3). The resulting copolycondensed polyester resin, an ethylene-maleic acid copolymer and a low-density polyethylene (density 0.924) were respectively supplied into an extruder, coextruded at a temperature of 280°C and cooled to obtain a three-layer film. The individual layers in the obtained three-layer film had the following thicknesses: copolycondensed polyester resin layer, 15 µm; ethylene-maleic anhydride copolymer layer, 10 µm; low-density polyethylene layer, 15 µm.

In a separate step, a sheet substrate was prepared from a biaxially drawn polyester resin 12 µm thick and an aluminum foil 9 µm thick. A two-part reactive urethane based adhesive was applied onto the biaxially drawn polyester resin surface to give a coating weight of 5 g/m² by gravure roll coating and the applied coating was dried in an oven to form an adhesive layer on the substrate. Subsequently, the surface of the low-density polyethylene layer in the already prepared three-layer film was subjected to a corona discharge treatment at a working power of 8 watts/m²·min. Immediately thereafter, the three-layer film was compressed in-line onto the surface of the adhesive layer on the substrate so as to obtain a laminate. The low-density polyethylene after the corona discharge treatment had a surface tension of 40 dynes/cm.

The obtained laminate was measured for the degree of meandering or neck-in on one side of the film, adhesive strength and heat seal strength by the following methods.
Meandering: The width of variation at end of the extruded three-layer film was measured.
Neck-in: The difference on one side of the constricted portion of the extruded three-layer film was measured.
Measurement of adhesive strength: The laminate was cut into a strip 15 mm wide and the low-density polyethylene layer was peeled off the substrate at a tensile speed of 300 mm/min to measure the adhesive strength.
Measurement of heat seal strength: The laminate was cut into two strips 15 mm wide. The two strips were superposed on each other in such a way that the copolycondensed polyester resin layer in one strip contacted the same layer in the other strip. The superposed strips were heat-sealed at a seal bar temperature of 180°C for a seal time of 1 second at a seal pressure of 2.81 kg/cm². Thereafter, one strip was peeled off the other at a tensile speed of 300 mm/min to measure the adhesive strength.

The results are shown in Table 2.

### Comparative Example 1

A substrate having an adhesive layer thereon was prepared as in Example 1. In a separate step, the copolycondensed polyester resin prepared in Example 1 was extruded in a single layer at a temperature of 280°C. Without a corona discharge treatment, the copolycondensed polyester resin in a molten state was compressed against the surface of the adhesive layer on the substrate and cooled to obtain a laminate. The copolycondensed polyester resin layer in the obtained laminate had a thickness of 40 µm. The laminate was subjected to the same measurements as in Example 1. The results are shown in Table 2.

### Comparative Examples 2 and 3

Substrates having an adhesive layer thereon were prepared as in Example 1. The copolycondensed polyester resin prepared in Example 1, an ethylene-maleic anhydride copolymer and a low-density polyethylene were coextruded at a temperature of 280°C or 320°C to form three-layer molten films. Without a corona discharge treatment, the surface of the molten low-density polyethylene layer was compressed against the surface of the adhesive layer on the substrate and cooled to obtain laminates for comparison. The individual layers in each laminate had the same thicknesses as in Example 1. The obtained laminates were subjected to the same measurements as in Example 1. The results are shown in Table 2. In Comparative Example 3 where coextrusion was performed at a temperature of 320°C, the viscosity of the copolycondensed polyester resin decreased to cause uneveness in the thicknesses of individual layers and 3 hours after the start of extrusion, a gelled insoluble matter flowed out of the T-die from both sides, making it impossible to continue the production in a consistent manner.

**Table 1**

| | Resins to be extruded | | Temperature (°C) | Corona discharge treatment | Method of forming laminate |
|---|---|---|---|---|---|
| | Type | Thickness (µm) | | | |
| Example 1 | copolycondensed polyester resin ethylene-maleic anhydride copolymer low-density polyethylene | 15 | | | coextrusion laminating |
| | | 10 | 280 | yes | |
| | | 15 | | | |
| Comparative Example 1 | copolycondensed polyester resin | | | | single-layer extrusion coating |
| | | 40 | 280 | no | |
| Comparative Example 2 | copolycondensed polyester resin ethylene-maleic anhydride copolymer low-density polyethylene | 15 | | | coextrusion coating |
| | | 10 | 280 | no | |
| | | 15 | | | |

**Table 2**

| | Meandering (mm) | Neck-in (mm) | Adhesive strength (g/15 mm) | Heat seal strength (kg/15 mm) |
|---|---|---|---|---|
| Example 1 | 2∼3 | 20∼25 | 550∼600 | 2.6∼2.9 |
| Comparative Example 1 | 20∼40 | 65∼90 | 300∼350 | 3.3 |
| Comparative Example 2 | 2∼3 | 20∼25 | 50∼70 | 0.8 |

### Comparative Example 4

A three-layer film was prepared as in Example 1. After applying a corona discharge treatment onto the low-density polyethylene surface at a working power of 8 watts/m²·min, the film was wound up. A two-part reactive urethane based adhesive was applied by gravure roll coating onto a substrate of the same composition as used in Example 1 to give a coating weight of 8 g/m². The applied coating was dried in an oven to form an adhesive layer on the substrate. Subsequently, the surface of the low-density polyethylene layer in the three-layer film that had been wound up was compressed against the surface of the adhesive layer on the substrate to effect dry laminating, thereby obtaining a laminate. The surface tension and adhesive strength of the low-density polyethylene were measured by the same methods as in Example 1. The results are shown in Table 3 together with the results of Example 1.

**Table 3**

| | Surface tension dyne/cm | Adhesive strength g/15 mm |
|---|---|---|
| Example 1 | 40 | 550 - 600 |
| Comparative Example 4 | 35 - 37 | 280 - 400 |

As is clear from Table 3, the surface tension of the low-density polyethylene was the highest immediately after corona discharge treatment and decreased thereafter upon storage and the adhesive strength decreased accordingly to cause a potential problem in practical applications.

A further problem with the laminate produced off-line was as follows: when the laminate was wound up for storage, the low-density polyethylene surface that had been subjected to corona discharge treatment was placed under high pressure to undergo pseudo-bonding to the polyester resin surface and the resulting blocking required a peeling force in the subsequent rewinding of the three-layer film, which not only caused difficulty in controlling the tension to be applied during the laminating operation but also reduced the laminating speed.

### Example 2

A polymer alloy consisting of 80 wt% polyethylene terephthalate and 20 wt% ethylene-methacrylic acid copolymer, an ethylene-α-olefin copolymer (density, 0.901) and a low-density polyethylene (density, 0.925) were respectively supplied into an extruder, coextruded at a temperature of 280°C and cooled to obtain a three-layered film. The indiviual layers in the obtained three-layer film had the following thicknesses: polymer alloy, 20 µm; ethylene-α-olefin copolymer, 10 µm; and low-density polyethylene, 30 µm.

In a separate step, polyethylene was extrusion-coated onto acid-proof paper having a basis weight of 310 g/m² to form a polyethylene layer in a thickness of 20 µm. A 9-µm aluminum foil preliminarily dry-laminated with a 12-µm biaxially drawn polyester resin was bonded to the paper with an intervening ionomer resin present, thereby preparing a substrate. The resulting substrate was provided with an adhesive layer as in Example 1. The ionomer resin layer had a thickness of 15 µm. Subsequently, the surface of the low-density polyethylene layer in the already prepared three-layer film was subjected to a corona discharge treatment at a working power of 8 watts/m²·min and, immediately thereafter, the three-layer film was compressed in-line against the surface of the adhesive layer on the substrate to form a laminate. The low-density polyethylene after the corona discharge treatment had a surface tension of 40 dynes/cm.

Using the laminate with the polyester resin layer serving as the innermost layer, a container having a capacity of 1000 ml was fabricated as shown in Fig. 7 in accordance with the step of sleeve making shown in Fig. 9. The container was filled with 100% pure orange juice and sealed for storage. Two weeks later, the container was opened and the quantity of limonene which was a flavor ingredient of the orange juice in the container was determined by gas chromatography. The residual amount of limonene was 96% of the initial filling. This showed that the laminate obtained by the present invention was not adsorptive of the flavor ingredient.

As described in detail on the foregoing pages, the present invention enabled the production of a laminate at low cost since a polyolefin was used in place of the heretofore used expensive adhesive polyolefins and because the number of process steps was reduced. Hence, the present invention provides a process for producing a laminate that has good processability experiencing smaller amounts of meandering and neck-in, that has satisfactory adhesion and that yet is inexpensive.

### Industrial Applicability

In short, the laminate produced by the process of the present invention is applicable as a constituent material for beverage containers that are to be formed by coextrusion, in particular, various containers that are intended to contain highly permeable liquid beverages including sake, whiskeys, juice, coffee, ptisan, oolong, mineral water, soup, etc.

## Claims

1. A process for producing a laminate comprising the steps of coextruding a polyester resin, an adhesive resin and a polyolefin under a temperature condition of 250 - 280°C,
, applying a corona discharge treatment to the surface of the polyolefin layer and, immediately thereafter, bonding the surface of said polyolefin layer and an adhesive-coated substrate in-line and in a continuous manner.

2. A process for producing a laminate as recited in claim 1 wherein said corona discharge treatment is performed under a working power condition of at least 6 watts/m²·min.

3. A process for producing a laminate as recited in claim 1 wherein said polyester resin is a heat-sealable polyester resin having a glass transition temperature of 50 - 150°C.

4. A process for producing a laminate as recited in claim 1, wherein said adhesive resin is an ethylene-α-olefin copolymer or a polyolefin modified by copolymerization or graft polymerization with a carboxylic acid monomer, an anhydride or ester thereof.

5. A process for producing a laminate as recited in claim 1 wherein the total thickness of the layer made of said adhesive resin and the layer made of said polyolefin is in the range of 10 - 150 µm.

6. A process for producing a laminate as recited in claim 1 wherein said substrate contains paper in its layer arrangement.

7. A process for producing a laminate as recited in claim 6 wherein said paper has a basis weight of 100 - 400 g/m².

8. A process for producing a laminate as recited in claim 6 wherein said paper is white board paper, raw paper for milk carton or acid-proof paper.

9. A process for producing a laminate as recited in claim 6 wherein said substrate contains paper and an aluminum foil on said paper in its layer arrangement.

10. A process for producing a laminate as recited in claim 1 wherein said substrate has a drawn plastic layer on the surface of the side contacting said polyolefin.

11. A process for producing a laminate as recited in claim 1 which has a layer arrangement consisting of printed ink/polyethylene/paper/ionomer/aluminum foil/biaxially drawn polyester resin/adhesive/polyolefin/adhesive resin/polyester resin.

12. A process for producing a laminate which comprises the steps of: (1) extrusion-coating polyethylene onto paper and applying printing onto said polyethylene; in a separate step, (2) dry-laminating a biaxially drawn polyester resin onto an aluminum foil; thereafter (3) bonding the surface of paper in (1) to the surface of aluminum foil in (2) together with an intervening polyethylene, ionomer resin, ethylene-methacrylic acid copolymer present, whereby a substrate is prepared; further, (4) applying an adhesive onto the surface of the biaxially drawn polyester resin in (2) by gravure roll coating and drying the applied coat in an oven to provide an adhesive layer on the substrate; and thereafter (5) coextruding a polyester resin, an adhesive resin and a polyolefin under a temperature condition of 250 - 280°C to form a three-layered film, performing a corona discharge treatment on the surface of the polyolefin layer in said film and, immediately thereafter, compressing the adhesive layer of (4) onto the film in-line.

## Patentansprüche

1. Verfahren zur Herstellung eines Laminats, das die nachstehenden Schritte umfaßt:
Coextrusion eines Polyesterharzes, eines Klebharzes und eines Polyolefins bei einer Temperatur von 250 - 280 °C, eine Koronaentladungsbehandlung der Oberfläche der Polyolefinschicht und unmittellbar danach das Verbinden der Oberfläche der Polyolefinschicht mit einem klebstoffbeschichteten Substrat in Linie und auf kontinuierliche Weise.

2. Verfahren zur Herstellung eines Laminats nach Anspruch 1, in dem die Koronaentladungsbehandlung mit einer Arbeitsleistung von mindestens 6 Watt/m²·min erfolgt.

3. Verfahren zur Herstellung eines Laminats nach Anspruch 1, in dem das Polyesterharz ein heißsiegelbares Polyesterharz mit einer Glasübergangstemperatur von 50 bis 150 °C ist.

4. Verfahren zur Herstellung eines Laminats nach Anspruch 1, in dem das Klebharz ein Ethylen-α-Olefin-Copolymer oder ein durch Copolymerisation oder Pfropfpolymerisation mit einem Carbonsäuremonomer, einem Anhydrid oder Ester davon modifiziertes Polyolefin ist.

5. Verfahren zur Herstellung eines Laminats nach Anspruch 1, in dem die Gesamtdicke der aus dem Klebharz gefertigten Schicht und der aus dem Polyolefin gefertigten Schicht im Bereich von 10 - 150 µm liegt.

6. Verfahren zur Herstellung eines Laminats nach Anspruch 1, in dem das Substrat in seiner Schichtanordnung Papier enthält.

7. Verfahren zur Herstellung eines Laminats nach Anspruch 6, in dem das Papier ein Basisgewicht von 100 - 400 g/m² aufweist.

8. Verfahren zur Herstellung eines Laminats nach Anspruch 6, in dem das Papier aus weißer Pappe, Rohpapier für Milchkartons oder säurebeständigem Papier besteht.

9. Verfahren zur Herstellung eines Laminats nach Anspruch 6, in dem das Substrat in seiner Schichtanordnung Papier und eine Aluminiumfolie auf dem Papier enthält.

10. Verfahren zur Herstellung eines Laminats nach Anspruch 1, in dem das Substrat eine auf der Oberfläche der Seite, die mit dem Polyolefin in Berührung steht, gezogene Kunststoffschicht aufweist.

11. Verfahren zur Herstellung eines Laminats nach Anspruch 1, das eine Schichtanordnung aufweist, die aus gedruckter Tinte/Polyethylen/Papier/Ionomer/Aluminium-folie/biaxial gezogenem Polyesterharz/Klebstoff/Polyolefin/Klebharz/Polyesterharz besteht.

12. Verfahren zur Herstellung eines Laminats, das die nachstehenden Schritte umfaßt:
(1) Beschichten von Papier mit Polyethylen mittels eines Extruders und Aufbringen eines Drucks auf das Polyethylen; in einem gesonderten Schritt, (2) trockenes Laminieren eines biaxial gezogenen Polyesterharzes auf eine Aluminiumfolie; danach (3) Verbinden der Oberfläche des Papiers von (1) mit der Oberfläche der Aluminiumfolie von (2) zusammen mit einem dazwischenliegenden Polyethylen, Ionomerharz, Ethylen-Methacrylsäure-Copolymer, wodurch ein Substrat hergestellt wird; ferner (4) Aufbringen eines Klebstoffs auf die Oberfläche des biaxial gezogenen Polyesterharzes von (2) mittels Rasterwalzenbeschichtung und Trocknen der aufgebrachten Schicht in einem Ofen, um eine Klebstoffschicht auf dem Substrat bereitzustellen; und danach (5) Coextrusion eines Polyesterharzes, eines Klebharzes und eines Polyolefins bei einer Temperatur von 250 - 280 °C, um eine dreilagige Folie herzustellen, Durchführung einer Koronaentladungsbehandlung auf der Oberfläche der Polyolefinschicht in der Folie und, unmittellbar danach, Aufpressen der Klebstoffschicht von (4) auf die Folie in Linie.

## Revendications

1. Procédé de production d'un stratifié, comprenant les étapes de coextrusion d'une résine polyester, d'une résine adhésive et d'une polyoléfine dans une plage de températures allant de 250 à 280 °C,
application d'un traitement par décharge lumineuse et, immédiatement après, liaison de la surface de ladite couche de polyoléfine et d'un substrat recouvert d'adhésif, de manière continue et en ligne.

2. Procédé de production d'un stratifié selon la revendication 1, dans lequel ledit traitement par décharge lumineuse est effectué sous une puissance de travail d'au moins 6 Watts/m².min.

3. Procédé de production d'un stratifié selon la revendication 1, dans lequel ladite résine polyester est une résine polyester thermoscellable ayant une température de transition vitreuse comprise dans la plage allant de 50 à 150 °C.

4. Procédé de production d'un stratifié selon la revendication 1, dans lequel ladite résine adhésive est un copolymère éthylène-α-oléflne ou une polyoléfine modifiée par une copolymérisation ou une polymérisation implantée à l'aide d'un monomère d'acide carboxylique, d'un anhydride ou son acide.

5. Procédé de production d'un stratifié selon la revendication 1, dans lequel l'épaisseur totale de la couche constituée de ladite résine adhésive et de la couche constituée de ladite polyoléfine est comprise dans la plage allant de 10 à 150 µm.

6. Procédé de production d'un stratifié selon la revendication 1, dans lequel ledit substrat contient du papier dans son agencement en couche.

7. Procédé de production d'un stratifié selon la revendication 6, dans lequel ledit papier présente un poids de base compris dans la plage allant de 100 à 400 g/m².

8. Procédé de production d'un stratifié selon la revendication 6, dans lequel ledit papier est du carton blanc, du papier brut pour un emballage en carton pour lait ou un papier étanche aux acides.

9. Procédé de production d'un stratifié selon la revendication 6, dans lequel ledit substrat contient du papier et une feuille d'aluminium sur ledit papier, dans son agencement en couches.

10. Procédé de production d'un stratifié selon la revendication 1, dans lequel ledit substrat présente une couche de matière plastique étirée sur la surface de la face en contact avec ladite polyoléfine.

11. Procédé de production d'un stratifié selon la revendication 1, dont l'agencement en couches consiste en de l'encre imprimée/polyéthylène/papier/ionomère/feuille d'aluminium/résine polyester étirée de façon bi-axiale/adhésif/polyoléfine/résine adhésive/résine polyester.

12. Procédé de production d'un stratifié, comprenant les étapes de : (1) extrusion-revêtement de polyéthylène sur du papier et application d'une impression sur ledit polyéthylène; en une étape séparée, (2) séchage-laminage d'une résine polyester étirée de manière bi-axiale sur une feuille d'aluminium; ensuite, (3) liaison de la surface en papier obtenue en (1) à la surface de la feuille d'aluminium obtenue en (2), conjointement avec un polyéthylène d'intervention, une résine ionomère, un copolymère éthylène-acide méthacrylique présent, de manière à préparer un substrat; en outre, (4) application d'un adhésif sur la surface de la résine polyester étirée de manière bi-axiale, obtenue en (2), par un revêtement au rouleau de gravure et séchange du revêtement appliqué dans un four, pour former une couche adhésive sur le substrat; et ensuite, (5) coextrusion d'une résine polyester, d'une résine adhésive et d'une polyoléfine dans une plage de températures allant de 250 à 280 °C, afin de former un film à trois couches, exécution d'un traitement par décharge lumineuse sur la surface de la couche polyoléfine contenue dans ledit film et, immédiatement après, pressage en ligne de la couche adhésive obtenue en (4) sur le film.
